(19) **Europäisches Patentamt / European Patent Office / Office européen des brevets**

(11) **EP 2 057 733 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **07817683.1**

(22) Anmeldetag: **17.10.2007**

(51) Int Cl.:
***H02M 1/34*** *(2007.01)*

(86) Internationale Anmeldenummer:
**PCT/DE2007/001848**

(87) Internationale Veröffentlichungsnummer:
**WO 2008/049391 (02.05.2008 Gazette 2008/18)**

(54) **ELEKTRISCHE SCHALTUNG**

ELECTRIC CIRCUIT

MONTAGE ÉLECTRIQUE

(84) Benannte Vertragsstaaten:
**DE FR**

(30) Priorität: **23.10.2006 DE 102006050267**

(43) Veröffentlichungstag der Anmeldung:
**13.05.2009 Patentblatt 2009/20**

(73) Patentinhaber: **Conti Temic Microelectronic GmbH**
**90411 Nürnberg (DE)**

(72) Erfinder:
• **SCHUBERT, Göran**
**91126 Schwabach (DE)**
• **HUPPMANN, Wolfgang**
**90443 Nürnberg (DE)**

(74) Vertreter: **Bonn, Roman Klemens et al**
**Continental Automotive GmbH**
**Patente und Lizenzen**
**Postfach 22 16 39**
**80506 München (DE)**

(56) Entgegenhaltungen:
WO-A-03/012965          FR-A- 2 592 749
US-A1- 2006 158 127      US-B1- 6 249 156

• (JAMES C BACH): "Integrated circuit ferrite bead strip and wafer (James C Bach)" RESEARCH DISCLOSURE, MASON PUBLICATIONS, HAMPSHIRE, GB, Bd. 309, Nr. 37, Januar 1990 (1990-01), XP007114614 ISSN: 0374-4353
• TAE HONG KIM ET AL: "3 GHz wide frequency model of ferrite bead for power/ground noise simulation of high-speed PCB" ELECTRICAL PERFORMANCE OF ELECTRONIC PACKAGING, 2002 OCT. 21-23, 2002, PISCATAWAY, NJ, USA, IEEE, 21. Oktober 2002 (2002-10-21), Seiten 217-220, XP010616664 ISBN: 0-7803-7451-7

EP 2 057 733 B1

## Beschreibung

Die Erfindung betrifft eine elektrische Schaltung zur Verstimmung eines Resonanzkreises nach dem Oberbegriff des Anspruchs 1.

Beim Durchschalten einer Diode muss zuerst die Sperrschichtkapazität der Diode entladen und anschließend die Durchflusskapazität der Diode gela-den werden. Beim Sperren der Diode muss dieser Vorgang umgekehrt durchlaufen werden. Stromkreise weisen in Folge der Geometrie ihrer Leitungen immer eine Induktivität auf, die mit den Kapazitäten der Diode einen Resonanzkreis ausbildet. Zusätzlich kann der Stromkreis weitere Induktivitäten, beispielsweise in Schaltreglern, enthalten, die zu einer Induktivitätserhöhung im Stromkreis führen. Der von den Induktivitäten und Kapazitäten gebildete Resonanzkreis weist eine oder mehrere Resonanzfrequenzen auf, die regelmäßig als störend empfunden werden. Besonders störend sind Resonanzfrequenzen bei Resonanzkreisen, die aus einem induktiven Stromkreis mit einer periodisch geschalteten Diode gebildet wer-den.

Um die Auswirkungen von Resonanzfrequenzen zu mindern, ist es bekannt, eine Reihenschaltung aus einem Kondensator und einem ohmschen Widerstand parallel zu der Diode zu schalten. Durch die höhere Gesamtkapazität des Stromkreises wird die Resonanzfrequenz zu niedrigeren Frequenzen hin verschoben, wo sie als weniger störend empfunden wird. Die Güte des Resonanzkreises wird durch den zusätzlichen Kondensator und den ohmschen Widerstand reduziert.

Nachteilig bei der beschriebenen Reihenschaltung aus Kondensator und ohmschem Widerstand ist, dass eine Verstimmung des Resonanzkreises nur in begrenztem Umfang möglich ist. Der ohmsche Widerstand muss so klein gewählt werden, dass der Betrag der Impedanz der Reihenschaltung aus Kondensator und ohmschem Widerstand in der Größenordnung des Betrags der Impedanz der Diodenkapazität liegt. Damit ist der Wert des ohmschen Widerstands auf wenige Ohm begrenzt. Zusätzlich darf die Kapazität des Kondensators nicht zu groß gewählt werden, da die Kapazität beim periodischen Umschalten der Spannung an der Diode umgeladen werden muss, was bei einer großen Kapazität zu hohen Kurzschlusseinschaltströmen führt.

Aus FR 2 592 749 ist eine Schaltung zur Bedämpfung des Schalt-verhaltens eines GTO (Gate Turn Off) - Thyristors bekannt, wobei Zwischen der Anode und der Kathode der Thyristors ein Dämpfungskreis angeordnet ist, der eine Induktivität zwischen einer Diode und einem Kondensator umfasst.

Der Erfindung liegt daher die Aufgabe zugrunde, eine elektrische Schaltung zur Verstimmung eines Resonanzkreises derart weiterzubilden, dass eine Verstimmung des Resonanzkreises in weiten Bereichen möglich ist.

Diese Aufgabe ist erfindungsgemäß gelöst durch eine elektrische Schaltung mit den im Anspruch 1 angegebenen Merkmalen. Erfindungsgemäß wurde erkannt, dass der Resonanzkreis dann in weiten Bereichen verstimmt werden kann, wenn die Verstimmungseinrichtung zumindest teilweise in Reihe zu der Ableitungseinrichtung angeordnet ist. Die Güte und die Resonanzfrequenz des Resonanzkreises kann in weiten Bereichen eingestellt werden, ohne dass Randbedingungen einzuhalten sind, wie dies im Stand der Technik zu erfolgen hat.

Die Ausbildung der Verstimmungseinrichtung nach Anspruch 1 führt zu einer höheren Dämpfung des Resonanzkreises, sodass Schwingungen schnell abklingen oder nicht entstehen, und führt aufgrund der Induktivität des induktiven Bauteils zu einer wirkungsvollen Verstimmung der mindestens einen Resonanzfrequenz.

Ein induktives Bauteil nach Anspruch 2 weist für niedrige Frequenzen ein rein induktives Verhalten auf, dem sich bei höheren Frequenzen ein Verhalten überlagert, wie es ein ohmscher Widerstand hat. Ein derartig selektives Verhalten des induktiven Bauteils ist insbesondere dann vorteilhaft, wenn der induktiv wirkende Stromkreis einen Schaltregler umfasst.

Eine Ausbildung des induktiven Bauteils nach Anspruch 3 ist kostengünstig.

Eine Begrenzungseinrichtung nach Anspruch 4 ermöglicht eine Begrenzung von unerwünschten induzierten Überspannungen, die infolge des induktiven Bauteils auftreten.

Eine Begrenzungseinrichtung nach Anspruch 5 ermöglicht ein wirkungsvolles Begrenzen von Überspannungen, wobei die Güte des Resonanzkreises im Wesentlichen nicht beeinflusst wird.

Durch eine Verstimmungseinrichtung nach Anspruch 6 kann die Güte des Resonanzkreises in einem sehr weiten Bereich eingestellt werden.

Bei einem Stromkreis nach Anspruch 7 kommen die Vorteile der Verstimmungseinrichtung besonders zum Tragen, da der Schaltregler durch das periodische Schalten ohne eine Verstimmung des Resonanzkreises diesen ständig anregen würde.

Bei einer Ableitungseinrichtung nach Anspruch 8 ist die Verstimmungseinrichtung sehr wirkungsvoll, da Freilaufdioden Kapazitäten aufweisen, die insbesondere mit der Induktivität eines Schaltreglers Resonanzfrequenzen ausbilden, die von dem Schaltregler angeregt werden und sehr störend sind.

Ausführungsbeispiele der Erfindung werden nachfolgend anhand der Zeichnung näher erläutert. Es zeigen:

Fig. 1    eine elektrische Schaltung gemäß einem ersten Ausführungsbeispiel der Erfindung, und

Fig. 2    eine elektrische Schaltung gemäß einem zweiten Ausführungsbeispiel der Erfindung.

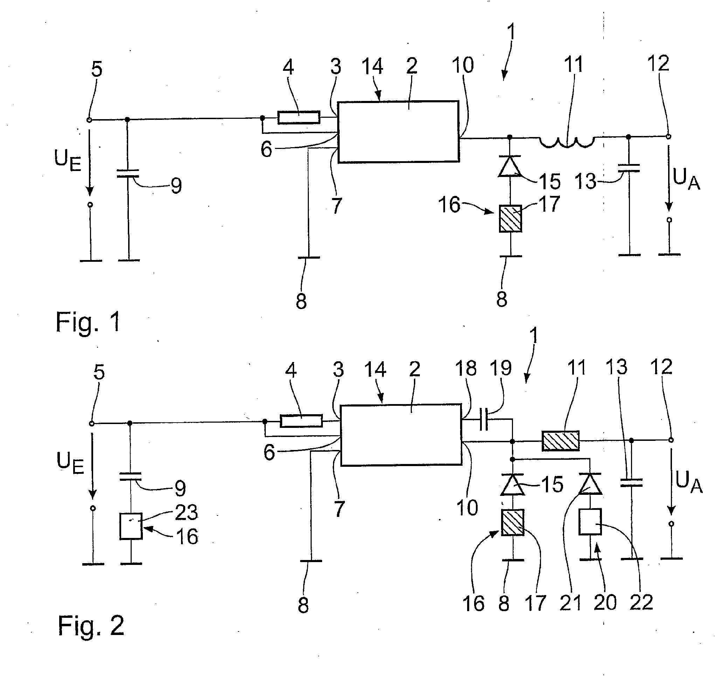

Fig. 1 zeigt eine elektrische Schaltung 1 zur Verstimmung eines Resonanzkreises. Die elektrische Schaltung 1 weist einen Schaltregler 2 auf, der beispielsweise als Tiefsetzsteller oder Hochsetzsteller ausgebildet ist. Der Schaltregler 2 umfasst drei Eingänge. Ein erster Eingang 3 ist über einen ohmschen Vorwiderstand 4 mit einem Schaltungseingang 5 verbunden. Der Vorwiderstand 4 weist einen Widerstandswert $R_V$ auf. Am Schaltungseingang 5 liegt eine Eingangsspannung $U_E$ an. Ein zweiter Eingang 6 des Schaltreglers 2 ist direkt mit dem Schaltungseingang 5 verbunden, sodass die Eingangsspannung $U_E$ unmittelbar an dem zweiten Eingang 6 des Schaltreglers 2 anliegt. Ein dritter Eingang 7 des Schaltreglers 2 ist unmittelbar mit einem Massepotential 8 verbunden. Eingangsseitig weist die Schaltung 1 einen ersten Glättungskondensator 9 auf, der mit dem Schaltungseingang 5 und dem Massepotential 8 verbunden ist und eine Kapazität $C_V$ besitzt. Der ohmsche Vorwiderstand 4 hat einen Widerstandswert $R_V$ von 100 kΩ und der erste Glättungskondensator 9 eine Kapazität $C_V$ von 100 nF.

Der Schaltregler 2 weist ferner einen Ausgang 10 auf, der über eine Speicherdrossel 11 mit einem Schaltungsausgang 12 verbunden ist. Die Speicherdrossel 11 besitzt eine Induktivität $L_A$. Am Schaltungsausgang 12 liegt die Ausgangsspannung $U_A$ an. Die Schaltung 1 weist ausgangsseitig einen zweiten Glättungskondensator 13 auf, der mit dem Schaltungsausgang 12 und dem Massepotential 8 verbunden ist und eine Kapazität $C_A$ aufweist. Die Induktivität $L_A$ der Speicherdrossel 11 beträgt 68 μH und die Kapazität $C_A$ des zweiten Glättungskondensators 9 beträgt 100 μF.

Ausgangsseitig weist die Schaltung 1 eine kapazitiv wirkende Ableitungseinrichtung 15 zur Ableitung eines Freilaufstromes auf. Die Ableitungseinrichtung 15 ist mit dem Ausgang 10 und dem Massepotential 8 verbunden. Die Ableitungseinrichtung 15 ist als Freilaufdiode ausgebildet. Nachfolgend wird die Ableitungseinrichtung als Freilaufdiode 15 bezeichnet.

In einer Durchlassrichtung betrachtet, ist die Freilaufdiode 15 eingangsseitig mit dem Massepotential 8 und ausgangsseitig mit dem Ausgang 10 des Schaltreglers 2 verbunden. Die Freilaufdiode 15 weist eine Sperrschichtkapazität $C_S$ und eine Durchflusskapazität $C_D$ auf, die das kapazitive Verhalten der Freilaufdiode bewirken. Der Schaltregler 2, der erste Glättungskondensator 9 und die Freilaufdiode 15 bilden einen induktiv wirkenden Stromkreis 14 aus, der die Induktivitäten des Schaltreglers 2, des ersten Glättungskondensators 9 und der Freilaufdiode 15 sowie die nicht näher bezeichneten Induktivitäten der Leitungen aufweist. Die Kapazitäten der Freilaufdiode 15 bilden zusammen mit den Induktivitäten des Stromkreises 14 einen Resonanzkreis aus, der eine Resonanzfrequenz $f_R$ aufweist. Der Freilaufstrom resultiert aus dem induktiven Verhalten des Stromkreises 14.

Zur Veränderung der Resonanzfrequenz $f_R$ ist eine Verstimmungseinrichtung 16 vorgesehen. Die Verstimmungseinrichtung 16 weist ein induktives Bauteil 17 auf, das in Reihe zu der Freilaufdiode 15 angeordnet ist.

Das induktive Bauteil 17 ist somit mit der Freilaufdiode 15 und dem Massepotential 8 elektrisch leitend verbunden. Das induktive Verhalten des induktiven Bauteils 17 ist durch eine Induktivität $L_V$ beschreibbar. Die Verstimmungseinrichtung 16 ist derart ausgebildet, dass der Resonanzkreis mit der Verstimmungseinrichtung 16 im Vergleich zu dem Resonanzkreis ohne der Verstimmungseinrichtung 16 eine reduzierte Güte G, also eine höhere Dämpfung D, aufweist. Erreicht wird dies durch den Realteil des induktiven Bauteils 17, welches aus einem Ferritmaterial besteht und als FerritBead ausgebildet ist, der die nicht näher bezeichnete Verbindungsleitung zwischen der Freilaufdiode 15 und dem Massepotential 8 umschließt.

Ohne die Verstimmungseinrichtung 16 entsteht beim Schließen des Resonanzkreises durch den Schaltregler 2 eine nur schwach gedämpfte Schwingung. Der Resonanzkreis wird in diesem Fall durch den geschlossenen Schaltregler 2, den ersten Glättungskondensator 9 und die Freilaufdiode 15 gebildet.

Das induktive Bauteil 17 weist in Folge des Ferritmaterials für niedrige Frequenzen ein rein induktives Verhalten auf, dem sich bei höheren Frequenzen ein ohmsches Verhalten überlagert. Durch das induktive Verhalten wird die Resonanzfrequenz des Resonanzkreises verstimmt, so dass dieser nicht länger durch das Schalten des Schaltreglers 2 angeregt wird. Weiterhin wird die Güte G des Resonanzkreises durch das ohmsche Verhalten stark reduziert, wodurch der Resonanzkreis stark gedämpft ist, sodass dieser bei höheren Frequenzen zwischen 100 MHz und 1000 MHz nicht mehr schwingfähig ist. Die Dämpfung D des Resonanzkreises ist derart hoch, dass der sogenannte aperiodische Kriechfall vorliegt. In der komplexen Frequenzebene bedeutet dies, dass die ursprünglich konjugiert komplexen Nullstellen der Übertragungsfunktion des Resonanzkreises ohne die Verstimmungseinrichtung 16 durch das ohmsche Verhalten der Verstimmungseinrichtung 16 auf die reelle Achse gewandert sind. Der Resonanzkreis ist somit so stark bedämpft, dass dieser nicht mehr schwingfähig ist.

Fig. 2 zeigt ein weiteres Ausführungsbeispiel der erfindungsgemäßen elektrischen Schaltung 1. Der Schaltregler 2 weist zur Unterstützung der internen Ladungspumpe einen zweiten Ausgang 18 auf, der über einen dritten Kondensator 19, der auch als Boot-Strap-Kondensator bezeichnet wird, mit dem ersten Ausgang 10 verbunden ist. Zur Begrenzung einer von dem induktiven Bauteil 17 hervorgerufenen Induktionsspannung ist eine Begrenzungseinrichtung 20 vorgesehen, die parallel zu der Freilaufdiode 15 und dem induktiven Bauteil 17 angeordnet ist. Die Begrenzungseinrichtung 20 weist eine Diode 21 und einen in Reihe zu dieser angeordneten ohmschen Widerstand 22 auf. Die Diode 21 ist eine niederkapazitive Kleinsignaldiode, deren kapazitives Verhalten durch eine Kapazität $C_K$ beschreibbar ist. Der ohmsche Widerstand 22 weist einen Widerstandswert $R_K$ auf, der sich aus dem Betrag einer maximal zulässi-

gen negativen Spannung $U_{max}$ am Ausgang 10 des Schaltreglers 2 und einem Strom i durch eine Induktivität der Speicherdrossel 11 kurz vor dem Ausschaltzeitpunkt des Schaltreglers 2 nach folgender Formel ergibt:

$$R_K \approx (U_{max} - U_D) / i,$$

wobei $U_D$ eine Flussspannung der Diode 21 ist.

Die Verstimmungseinrichtung 16 weist weiterhin einen ohmschen Widerstand 23 auf, der in Reihe zu dem im Resonanzkreis befindlichen ersten Glättungskondensator 9 geschalten ist. Der ohmsche Widerstand 23 weist einen Widerstandswert $R_I$ auf.

Mittels der Diode 21 werden von dem induktiven Bauteil 17 hervorgerufene Induktionsspannungen gekappt. Die Kapazität $C_K$ der Diode 21 und die Induktivität $L_V$ des induktiven Bauteils 17 bilden einen weiteren Resonanzkreis aus, der mittels des ohmschen Widerstands 22 gedämpft ist. Der ohmsche Widerstand 22 schützt die Diode 21 gleichzeitig vor Zerstörung, wenn die Durchlassspannung der Diode 21 kleiner ist, als die Durchlassspannung der Freilaufdiode 15. Der ohmsche Widerstand 23 dient zur weiteren Reduktion der Güte Q bei niedrigen Frequenzen, wenn das induktive Bauteil 17 ein rein induktives Verhalten aufweist.

## Patentansprüche

1. Elektrische Schaltung zur Verstimmung eines Resonanzkreises, mit

    a. einem induktiv wirkenden Stromkreis (14),
    b. einer kapazitiv wirkenden Ableitungseinrichtung (15) zur Ableitung eines Freilaufstromes des Stromkreises (14), wobei der Stromkreis (14) und die Ableitungseinrichtung (15) einen Resonanzkreis mit mindestens einer Resonanzfrequenz ($f_R$) ausbilden, und
    c. einer Verstimmungseinrichtung (16) zur Veränderung der mindestens einen Resonanzfrequenz ($f_R$),
    d. die Verstimmungseinrichtung (16) zumindest teilweise in Reihe zu der Ableitungseinrichtung (15) angeordnet ist,
    e. wobei die Verstimmungseinrichtung (16) ein in Reihe zu der Ableitungseinrichtung (15) angeordnetes induktives Bauteil (17) aufweist, **dadurch gekennzeichnet, dass** die Verstimmungseinrichtung (16) derart ausgebildet ist, dass durch das ohmsche Verhalten des induktiven Bauteils (17) der Resonanzkreis eine reduzierte Güte (Q) aufweist, wodurch der Resonanzkreis so stark gedämpft ist dass der aperiodische Kriechfall vorliegt.

2. Elektrische Schaltung nach Anspruch 1, **dadurch gekennzeichnet, dass** das induktive Bauteil (17) aus einem Ferritmaterial besteht.

3. Elektrische Schaltung nach Anspruch 1 oder 2 , **dadurch gekennzeichnet, dass** das induktive Bauteil (17) als Ferrit-Bead ausgebildet ist.

4. Elektrische Schaltung nach einem der Ansprüche 1 bis 3 , **dadurch gekennzeichnet, dass** eine parallel zu der Ableitungseinrichtung (15) und dem induktiven Bauteil (17) angeordnete Begrenzungseinrichtung (20) zur Begrenzung einer von dem induktiven Bauteil (17) hervorgerufenen Induktionsspannung vorgesehen ist.

5. Elektrische Schaltung nach Anspruch 4, **dadurch gekennzeichnet, dass** die Begrenzungseinrichtung (20) eine Diode (21) und einen in Reihe zu dieser angeordneten ohmschen Widerstand (22) aufweist.

6. Elektrische Schaltung nach Anspruch 5 , **dadurch gekennzeichnet, dass** die Verstimmungseinrichtung (16) einen ohmschen Widerstand (23) aufweist, der in Reihe zu einem im Resonanzkreis befindlichen Kondensator (9) geschalten ist.

7. Elektrische Schaltung nach einem der Ansprüche 1 bis 6, **dadurch gekennzeichnet, dass** der Stromkreis (14) einen Schaltregler (2) umfasst.

8. Elektrische Schaltung nach einem der Ansprüche 1 bis 7 , **dadurch gekennzeichnet, dass** das die Ableitungseinrichtung (15) als Freilaufdiode ausgebildet ist.

## Claims

1. Electric circuit for detuning a resonant circuit, having

    a. an inductively acting circuit (14),
    b. a capacitively acting dissipating device (15) for dissipating a freewheeling current of the circuit (14), wherein the circuit (14) and the dissipating device (15) form a resonant circuit with at least one resonant frequency ($f_R$)), and
    c. a detuning device (16) for changing the at least one resonant frequency ($f_R$),
    d. the detuning device (16) is arranged at least partially in series with the dissipating device (15),
    e. wherein the detuning device (16) has an inductive component (17) arranged in series with the dissipating device (15),

    **characterized in that** the detuning device (16) is designed such that the resonant circuit has a reduced Q factor (Q) by virtue of the nonreactive behaviour of the inductive component (17), as a result of which the resonant circuit is so heavily damped that the aperiodic overdamped condition is present.

2. Electric circuit according to Claim 1, **characterized in that** the inductive component (17) consists of a ferrite material.

3. Electric circuit according to Claim 1 or 2, **characterized in that** the inductive component (17) is formed as ferrite bead.

4. Electric circuit according to any of Claims 1 to 3, **characterized in that** a limiting device (20) arranged in parallel with the dissipating device (15) and the inductive component (17) is provided for limiting an induction voltage induced by the inductive component (17).

5. Electric circuit according to Claim 4, **characterized in that** the limiting device (20) has a diode (21) and a nonreactive resistor (22) connected in series with said diode.

6. Electric circuit according to Claim 5, **characterized in that** the detuning device (16) has a nonreactive resistor (23) which is connected in series with a capacitor (9) located in the resonant circuit.

7. Electric circuit according to any of Claims 1 to 6, **characterized in that** the circuit (14) comprises a chopper regulator (2).

8. Electric circuit according to any of Claims 1 to 7, **characterized in that** the dissipating device (15) is designed as freewheeling diode.

**Revendications**

1. Montage électrique permettant de désaccorder un circuit de résonance, comportant

   a. un circuit électrique (14) à action inductive,
   b. un dispositif de déviation (15) à action capacitive pour la déviation d'un courant de roue libre du circuit électrique (14), ledit circuit électrique (14) et ledit dispositif de déviation (15) formant un circuit de résonance avec au moins une fréquence de résonance ($f_R$), et
   c. un dispositif de désaccordage (16) pour faire varier ladite au moins une fréquence de résonance ($f_R$),
   d. le dispositif de désaccordage (16) est monté au moins partiellement en série avec le dispositif de déviation (15),

   e. ledit dispositif de désaccordage (16) comportant un composant inductif (17), monté en série avec le dispositif de déviation (15),

**caractérisé en ce que** le dispositif de désaccordage (16) est configuré de telle sorte que, sous l'effet du comportement ohmique du composant inductif (17), le circuit de résonance possède une qualité (Q) réduite, moyennant quoi le circuit de résonance est affaibli si fortement qu'il se présente le cas de courant de fuite apériodique.

2. Montage électrique selon la revendication 1, **caractérisé en ce que** le composant inductif (17) est réalisé dans un matériau ferritique.

3. Montage électrique selon la revendication 1 ou 2, **caractérisé en ce que** le composant inductif (17) est réalisé sous la forme d'un noyau de ferrite.

4. Montage électrique selon l'une quelconque des revendications 1 à 3, **caractérisé en ce qu'**il est prévu un dispositif de limitation (20), qui est disposé parallèlement au dispositif de déviation (15) et au composant inductif (17) et qui est destiné à limiter une tension d'induction produite par le composant inductif (17).

5. Montage électrique selon la revendication 4, **caractérisé en ce que** le dispositif de limitation (20) comporte une diode (21) et une résistance (22) ohmique montée en série avec cette dernière.

6. Montage électrique selon la revendication 5, **caractérisé en ce que** le dispositif de désaccordage (16) comporte une résistance (23) ohmique, qui est montée en série avec un condensateur (9) situé dans le circuit de résonance.

7. Montage électrique selon l'une quelconque des revendications 1 à 6, **caractérisé en ce que** le circuit électrique (14) comporte un régulateur de distribution (2).

8. Montage électrique selon l'une quelconque des revendications 1 à 7, **caractérisé en ce que** le dispositif de déviation (15) est réalisé sous la forme d'une diode de roue libre.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2592749